# EUROPEAN PATENT APPLICATION

(11) **EP 4 563 377 A1**
(43) Date of publication of application: **04.06.2025**
(21) Application number: 23846046.3
(22) Date of filing: 14.06.2023
(51) Int. Cl.: B60K 1/00

(54) **MOTOR UNIT**

(30) Priority: 25.07.2022 JP 2022118190; 25.07.2022 JP 2022118191; 25.07.2022 JP 2022118192; 20.02.2023 JP 2023024191
(71) Applicant: Kawasaki Motors, Ltd., Akashi, Hyogo 673-8666 (JP)
(72) Inventor: MATSUDA, Yoshimoto, Akashi, 673-8666 (JP)
(74) Representative: Wenzel Nemetzade Warthmüller Patentanwälte Part mbB
(86) International application number: PCT/JP2023/022000
(87) International publication number: WO 2024/024311

(57) **Abstract**

A motor unit (6) drives an electric vehicle. The motor unit (6) includes an electric motor (20) and an inverter (10). The electric motor (20) generates drive power and outputs the drive power from a drive shaft (27) provided on a first side in an axial direction. The inverter (10) is arranged adjacent to a second side in the axial direction of the electric motor (20), generates drive current for driving the electric motor (20), and supplies the drive current to the electric motor (20).

## Description

### Technical Field

This application relates mainly to a motor unit comprising a motor that drives a vehicle and a current adjustment device.

Patent Document 1 discloses an electric vehicle. The electric vehicle comprises a drive motor and an inverter. The drive motor generates drive power. The inverter is arranged at a position radially spaced apart from the drive motor. The inverter generates drive current and supplies it to the drive motor. The drive power generated by the drive motor is transmitted to the drive wheel after being changed in speed by a transmission.

### Citation List

### Patent Literature

Patent Document 1: Japanese Unexamined Patent Application Publication No. 2016-172457

### Summary of Invention

### Technical Problem

In the electric vehicle of Patent Document 1, the inverter is arranged at a position radially spaced apart from the drive motor. Therefore, the size of the configuration including the drive motor and the inverter becomes large.

This application is made in view of the above circumstances, and its main object is to provide a compact motor unit including an electric motor and an inverter for driving a vehicle.

### Solution to Problem

The problem to be solved by this application is as described above, and the means for solving this problem and its effects will be explained next.

According to an aspect of this application, a motor unit having the following configuration is provided. That is, the motor unit drives a vehicle. The motor unit comprises an electric motor and a current adjustment device. The electric motor generates drive power and outputs the drive power from a drive shaft provided on a first side in an axial direction. The current adjustment device is disposed adjacent to the electric motor in the axial direction, generates drive current for driving the electric motor, and supplies the drive current to the electric motor.

### Advantageous Effect of Invention

According to this application, a motor unit including an electric motor and an inverter for driving a vehicle can be realized with a compact size in the radial direction.

### Brief Description of Drawings

[Fig. 1] A side view of an electric vehicle equipped with a motor unit according to the first embodiment.
[Fig. 2] A perspective view of the motor unit according to the first embodiment.
[Fig. 3] A sectional view of the motor unit according to the first embodiment.
[Fig. 4] A sectional view of the motor unit in which the first power transmission of the first embodiment has been changed to the second power transmission.
[Fig. 5] A sectional view of the motor unit according to the second embodiment.
[Fig. 6] A sectional view of the motor unit according to the third embodiment.
[Fig. 7] A sectional view of the motor unit according to the fourth embodiment.

### Description of Embodiments

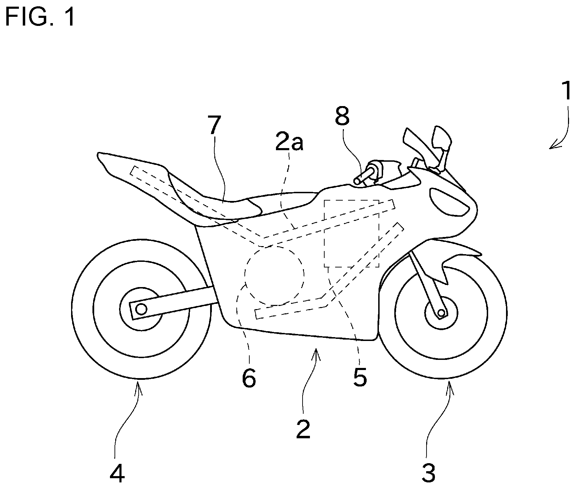

Next, embodiments of this application will be explained with reference to the drawings. First, with reference to Fig. 1, an electric vehicle 1 equipped with a motor unit 6 according to the first embodiment will be briefly explained. Fig. 1 is a side view of the electric vehicle 1.

In the following description, the left-right direction of the electric vehicle 1 is defined from the direction as viewed by a driver riding the electric vehicle 1. Therefore, the front-rear direction corresponds to the vehicle length direction, and the left-right direction corresponds to the vehicle width direction. Further, the vertical direction and the up-down direction correspond to the height direction. As shown in Fig. 1, the electric vehicle 1 comprises a vehicle body 2, a front wheel 3, and a rear wheel 4.

The vehicle body 2 includes multiple frames 2a that form the skeleton of the electric vehicle 1. Various components equipped on the electric vehicle 1 are mounted to these frames 2a. Specifically, a battery 5 and a motor unit 6 are mounted to the frames 2a.

The battery 5 stores electric power and supplies the stored electric power to electrical equipment such as the motor unit 6. In this embodiment, the battery 5 is charged using charging facilities. Alternatively, the electric vehicle 1 may be equipped with an engine, and the battery 5 may be charged by the drive power of the engine. That is, the electric vehicle 1 may be a hybrid-type vehicle equipped with an engine and a motor.

The motor unit 6 comprises an electric motor 20 as described later. The electric motor 20 generates drive power using electric power supplied from the battery 5. The drive power generated by the electric motor 20 is transmitted to the rear wheel 4, which is the drive wheel. This enables the electric vehicle 1 to run.

The electric vehicle 1 further comprises a seat 7 and a steering handle 8. The driver sits on the seat 7, places their feet on steps on the side of the vehicle body 2, and operates the steering handle 8 with their hands. When the driver operates the steering handle 8, the direction of the front wheel, which is the steering wheel, changes. This enables changing the traveling direction of the electric vehicle 1. Also, in this embodiment, since the driver straddles the seat 7 to ride, the electric vehicle 1 is a straddle-type vehicle. Further, the electric vehicle 1 is a lean-type vehicle that tilts the vehicle body 2 toward the turning center side relative to the road surface when turning.

The electric vehicle 1 of this embodiment is a motorcycle having one front wheel 3 and one rear wheel 4. However, the electric vehicle 1 is not limited to a motorcycle, and may have two front wheels 3 or may have two rear wheels 4. In other words, the number of wheels equipped on the electric vehicle 1 may be any of 2, 3, or 4. Also, the electric vehicle 1 may be a vehicle for transportation purposes or may be a leisure vehicle for leisure purposes. The motor unit 6 may be used mainly in vehicles that do not use wheels, for example, other vehicles such as hydrofoils or aircraft. The motor unit 6 may be used in unmanned moving bodies such as unmanned vehicles that humans do not ride. The motor unit 6 may be used in devices other than vehicles.

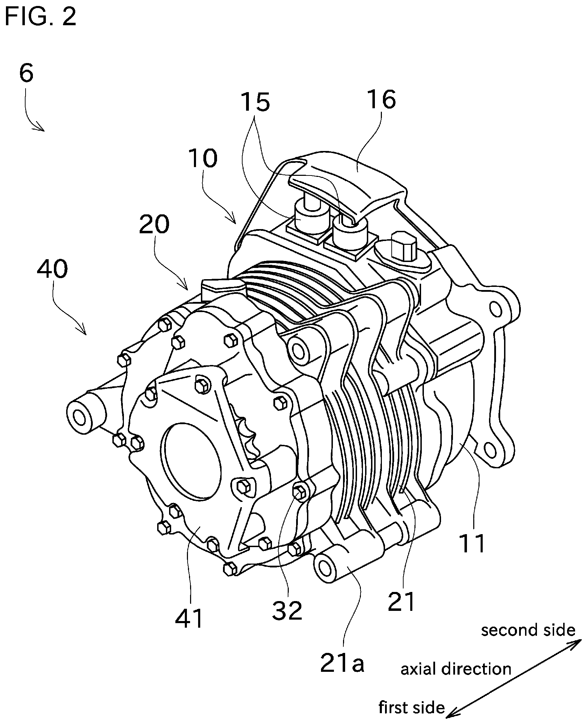

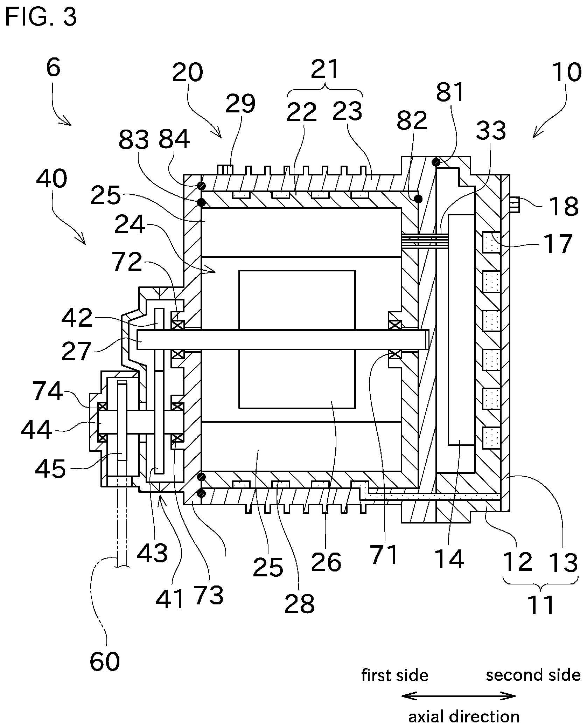

Next, the motor unit 6 will be explained in detail with reference to Figs. 2 and 3. In the following description, the axial direction of the electric motor 20 is simply referred to as the "axial direction," and the direction perpendicular to the axial direction is referred to as the "radial direction." Further, among the axial direction, the side where the drive shaft 27 of the motor unit 6 protrudes is referred to as the first side, and the opposite side to the first side is referred to as the second side.

The motor unit 6 comprises an inverter 10 and an electric motor 20. The inverter 10 and the electric motor 20 are connected to each other. This enables the inverter 10 and electric motor 20 to be handled integrally. Note that the drive shaft 27 of the electric motor 20 is connected to a first power transmission 40 for transmitting drive power toward the rear wheel 4, which is the drive wheel. The first power transmission 40 is not an essential component of the motor unit 6. Therefore, the first power transmission 40 may be arranged at a position greatly spaced apart from the inverter 10 and the electric motor 20. In this embodiment, the first power transmission 40 is realized by a sprocket 45 fixed to the drive shaft 27.

In this embodiment, the inverter 10 is arranged adjacent to the second side of the electric motor 20. Specifically, the inverter 10 and the electric motor 20 are adjacent with the thickness direction of the inverter 10 aligned with the axial direction of the electric motor 20. Also, the inverter 10 is mounted to the second side of the electric motor 20, and the inverter 10 and the electric motor 20 are in contact. Note that "adjacent" includes not only a state of being in contact but also a state of being slightly spaced apart. For example, when the inverter 10 and the electric motor 20 are mounted in a single housing, the inverter 10 may be slightly spaced apart from the electric motor 20.

As shown in Fig. 3, the inverter 10 comprises an inverter cover 11, an inverter body 14, a terminal 15, an insulating cover 16, a first coolant passage 17, and a supply port 18.

The inverter cover 11 is a cylindrical-shaped component for housing the inverter body 14. In this specification, "cylindrical shape" means that the overall shape is substantially cylindrical. Therefore, "cylindrical shape" includes not only a strictly cylindrical shape but also an approximately cylindrical shape. For example, it may be a shape where another shape is added to a cylindrical shape, or a shape where a part of a cylindrical shape is removed. Note that the inverter cover 11 is not limited to being cylindrical. For example, the inverter cover 11 may be rectangular parallelepiped-shaped. The inverter cover 11 is fixed to the inverter body 14 and covers at least a part of the inverter body 14. The method of fixing the inverter cover 11 and the inverter body 14 is, for example, by bolts, but a fixing method other than bolts may be used. The inverter cover 11 protects the inverter body 14 from impact or water, etc. In this embodiment, the inverter cover 11 is constituted by a first inverter cover 12 and a second inverter cover 13. The first inverter cover 12 includes a fixing plate to which the inverter body 14 is fixed. The second inverter cover 13 is a plate-shaped member arranged on the second side in the axial direction of the first inverter cover 12. However, the inverter cover 11 may be a single component. In this embodiment, the cylindrical inverter cover 11 is formed coaxially with the cylindrical motor cover 21.

The inverter cover 11 may be case-shaped to cover substantially the entire inverter body 14. Alternatively, the inverter cover 11 may be configured to cover only a part of the inverter body 14.

The inverter 10 is connected to the electric motor 20. In this embodiment, the inverter cover 11 and the electric motor 20 (specifically, the motor cover 21) are connected. The structure connecting the inverter cover 11 and the electric motor 20 is, for example, a bolt. Specifically, an insertion hole is formed in the inverter cover 11, and a screw hole is formed in the motor cover 21. The inverter cover 11 and the motor cover 21 are connected by inserting and tightening a bolt through the insertion hole of the inverter cover 11 and the screw hole of the motor cover 21. This connects the inverter 10 and the electric motor 20. Note that a screw hole may be formed in the inverter cover 11 and an insertion hole may be formed in the motor cover 21. Also, the connection between the inverter 10 and the electric motor 20 is not limited to bolts and may be another structure. Also, the inverter 10 and the electric motor 20 may be connected via another member. The inverter cover 11 is not an essential component of the inverter 10 and may be omitted. In this case, the inverter 10 and the electric motor 20 are connected through a part made as the exterior of the inverter 10 or through the aforementioned other member.

The inverter body 14 is a plate-shaped member in its external shape. More specifically, the dimension of the inverter body 14 in the thickness direction is shorter than its dimension in the radial direction. The thickness direction of the inverter body 14 is parallel to the axial direction. The thickness direction of the circuit board formed inside the inverter body 14 coincides with the thickness direction of the external shape. The inverter body 14 generates drive current using electric power stored in the battery 5 and supplies the drive current to the electric motor 20. Specifically, direct current is supplied from the battery 5 to the inverter body 14 via the terminal 15. The terminal 15 is arranged on the outer surface in the radial direction of the inverter cover 11. The terminal 15 and the battery 5 are configured to be electrically connectable by wires. Note that the terminal 15 comprises positive and negative terminals arranged adjacent to each other. The inverter body 14 converts direct current into alternating current to generate drive current. Also, the inverter body 14 and the motor body 24 are electrically connected via conductors 33. In this embodiment, since three-phase alternating current is used, three conductors 33 are provided. That is, the motor body 24 is a three-phase alternating current motor. The drive current generated by the inverter body 14 is supplied to the motor body 24 via the three conductors 33.

The conductors 33 supply electric power from the inverter 10 to the electric motor 20. The conductors 33 are connected to the inverter body 14 and connected to the motor body 24 via the motor cover 21. Also, the conductors 33 are arranged on a surface continuous with the mating surface where the inverter 10 and the electric motor 20 are in surface contact. In this embodiment, the inverter cover 11 and the motor cover 21 are in surface contact. That is, the location where the inverter cover 11 and the motor cover 21 are in surface contact corresponds to the "mating surface." Compared to a configuration where the inverter 10 and the electric motor 20 are arranged spaced apart and connected by wires, this embodiment can achieve electrical connection with a simpler configuration. A simpler configuration means, in other words, that the length of conductors such as wires or bus bars can be shortened. Also, a first sealing member 81 is arranged outside the location where the conductors 33 are arranged on the mating surface. In other words, the conductors 33 are arranged at a location that is made waterproof by the first sealing member 81.

In this embodiment, the inverter 10 corresponds to the "current adjustment device." However, the inverter 10 is one example of the current adjustment device, and may be a device that generates drive current by, for example, amplifying current or adjusting current waveform, and supplies the drive current to the electric motor 20. For example, when the motor body 24 is a direct current motor, the current adjustment device generates current for driving the direct current motor and outputs it to the direct current motor.

The insulating cover 16 is a plate-shaped member having an insulating property and is arranged to cover the terminal 15. Specifically, the insulating cover 16 covers the radial outer side of the terminal 15 and the second side in the axial direction of the terminal 15. This can suppress the terminal 15 from short-circuiting by contacting with other conductive members of the electric vehicle 1. Also, the terminal 15 can be protected from impact. Note that the insulating cover 16 may cover only the radial outer side of the terminal 15, or may cover only the axial outer side of the terminal 15. The insulating cover 16 may also be arranged at a position partitioning between the positive terminal and the negative terminal. The insulating cover 16 is not an essential component of the inverter 10 and may be omitted.

The first coolant passage 17 is a path through which coolant for cooling the inverter body 14 passes. In this embodiment, the first coolant passage 17 is formed in the inverter cover 11. Specifically, a part of the first coolant passage 17 is formed by a groove formed on the second side in the axial direction of the first inverter cover 12 and the second inverter cover 13. This enables cooling of the first inverter cover 12, and therefore the inverter body 14 fixed to the first inverter cover 12 can be sufficiently cooled. The first coolant passage 17 may be formed in the inverter body 14. Alternatively, the space between the inverter cover 11 and the inverter body 14 may be used as the first coolant passage 17. It is preferable that the first coolant passage 17 be formed at a position adjacent to the heat-generating portion of the inverter 10. As shown in Fig. 3, a supply port 18 is provided in the inverter cover 11. In this embodiment, the supply port 18 is provided on the outer surface of the second side in the axial direction of the inverter cover 11. The supply port 18 is formed in a connection portion where a coolant hose for supplying coolant to the motor unit 6 is mounted. The coolant is supplied from the supply port 18 and passes through the first coolant passage 17. This enables the inverter body 14 to be cooled through heat exchange between the coolant and the inverter body 14. The coolant that has passed through the first coolant passage 17 is used for cooling the motor body 24 as described later.

The electric motor 20 is arranged to be adjacent to the first side of the inverter 10 in the axial direction and adjacent to the second side of the first power transmission 40. Specifically, the electric motor 20 is mounted to and in contact with the first side of the inverter 10, and the electric motor 20 is mounted to and in contact with the second side of the first power transmission 40. The external shape of the electric motor 20 is cylindrical.

As shown in Fig. 3, the electric motor 20 comprises a motor cover 21, a motor body 24, a drive shaft 27, a second coolant passage 28, and a discharge port 29. Also, the motor cover 21 is shown in Fig. 2.

The motor cover 21 is a cylindrical-shaped component for housing the motor body 24. As shown Fig. 2, the motor cover 21 has a frame mounting portion 21a. The frame mounting portion 21a is formed multiple times on the outer circumferential surface of the motor cover 21. The frame mounting portion 21a is a part for mounting to the frame 2a. A through-hole used for mounting to the frame 2a is formed in the frame mounting portion 21a. In this embodiment, the electric motor 20 is mounted to the frame 2a, but the inverter 10 or the first power transmission 40 may be mounted to the frame 2a.

The motor cover 21 is constituted by a first motor cover 22 and a second motor cover 23. The first motor cover 22 and the second motor cover 23 are each cylindrical in shape. A second sealing member 82 is arranged between the first motor cover 22 and the second motor cover 23. However, the motor cover 21 may be a single component. The first motor cover 22 is arranged on the inner radial side compared to the second motor cover 23. In this embodiment, at the boundary between the inverter cover 11 and the motor cover 21, the first length from the axial position to the outer circumferential surface of the motor cover 21 and the second length from the axial position to the outer circumferential surface of the inverter cover 11 are the same length throughout the entire circumference. Specifically, the first length from the axial position to the outer circumferential surface of the second motor cover 23 and the second length from the axial position to the outer circumferential surface of the first inverter cover 12 are the same length throughout the entire circumference. However, the first length and the second length may be the same length only in a part of the circumference. Note that the frame mounting portion 21a is formed on the second motor cover 23. This makes it difficult for the load from the frame 2a to be transmitted to the first motor cover 22.

The motor cover 21 is fixed to the motor body 24 and covers at least a part of the motor body 24. Specifically, the first motor cover 22 is fixed to the motor body 24. This protects the motor body 24 from impact or water. The method of fixing the motor cover 21 and the motor body 24 is, for example, by bolts, but a fixing method other than bolts may be used. Note that the motor cover 21 is not limited to being cylindrical. For example, the motor cover 21 may be rectangular parallelepiped-shaped.

As mentioned above, the motor cover 21 of the electric motor 20 is connected to the inverter cover 11 of inverter 10. The second motor cover 23 of the motor cover 21 and the first inverter cover 12 of the inverter cover 11 are connected. In this embodiment, the first side of the inverter cover 11 is open, and the open part is covered by the motor cover 21. However, the first side of the inverter cover 11 may be closed. In this embodiment, the second side of the motor cover 21 is closed. However, the second side of the motor cover 21 may be open, and the open part may be covered by the inverter cover 11.

The motor cover 21 also has the function of connecting to the first power transmission 40. Specifically, a screw hole is formed on the end surface of the first side in the axial direction of the motor cover 21. Also, a through-hole is formed in the first power transmission 40. The positions of the through-hole of the first power transmission 40 and the screw hole of the motor cover 21 correspond. By inserting and tightening bolt 32 through these through-hole and screw hole as shown in Fig. 2, the motor cover 21 and the first power transmission 40 are connected. Note that the connection method between the motor cover 21 and the first power transmission 40 may vary. For example, flanges may be formed on the motor cover 21 and first power transmission 40 to connect them. Alternatively, they may be connected via another member. Also, the first side of the motor cover 21 is open. The lid member 41 of the first power transmission 40 is arranged to cover the open part of the first side of the motor cover 21. A sealing member is arranged between the motor cover 21 and the lid member. Specifically, a third sealing member 83 is arranged between the lid member 41 of the first power transmission 40 and the first motor cover 22 of the motor cover 21. A fourth sealing member 84 is arranged between the lid member 41 of the first power transmission 40 and the second motor cover 23 of the motor cover 21. This can suppress water from entering the inside of the motor cover 21 through the mating surface between the motor cover 21 and the first power transmission 40. The waterproofing structure in this embodiment is an example, and the position and number of sealing members can be changed.

The second motor cover 23 is connected to the inverter cover 11 on the second side in the axial direction. Furthermore, the second motor cover 23 is connected to the first motor cover 22 via the lid member 41 on the first side in the axial direction. Therefore, the second motor cover 23 functions as a connection member to integrally connect the inverter cover 11 and the first motor cover 22. This increases the degree of design freedom for the first motor cover 22 and the inverter cover 11 compared to directly connecting the first motor cover 22 and the inverter cover 11.

The motor cover 21 covers substantially the entire motor body 24, thus being case-shaped. In particular, the first motor cover 22 covers substantially the entire motor body 24. The first motor cover 22 is coaxial with the motor body 24. However, the motor cover 21 may be configured to cover only a part of the motor body 24.

The motor cover 21 is made of metal. By having the first motor cover 22 cover the second motor cover 23, the protective effect for the motor body 24 can be enhanced. Also, by realizing the first motor cover 22 and the second motor cover 23 as separate members, the functions of supporting parts inside the motor body 24 and connecting the motor body 24 with other parts can be separated. This can improve the design flexibility.

For example, the second motor cover 23 may have a regulation portion formed to prevent relative movement of the first motor cover 22 in the second side direction with respect to the second motor cover 23. In this case, the second motor cover 23 may be configured so that the first motor cover 22 is fixed by being sandwiched between the lid member 41 and the receiving portion of the second motor cover 23 when the lid member 41 and the first motor cover 22 are fastened on the first side in the axial direction.

Ribs are formed on the outer circumferential surface of the second motor cover 23 to increase the rigidity of the second motor cover 23 and to improve its heat dissipation properties.

The motor body 24 is a cylindrical-shaped member. The motor body 24 generates drive power using drive current supplied from the inverter body 14. The motor body 24 comprises a stator 25 and a rotor 26. The stator 25 is arranged multiple times in the circumferential direction on the inner circumferential surface of the first motor cover 22. The stator 25 receives drive current via the conductors 33. The rotor 26 is mounted to the drive shaft 27. When drive current is supplied to the stator 25, the magnetic field around the rotor 26 changes. This causes the rotor 26 to rotate integrally with the drive shaft 27. Thus, the motor body 24 generates drive power. The drive power generated by the motor body 24 is output as rotational drive power of the drive shaft 27. The drive shaft 27 is positioned at the radial center of the electric motor 20. The drive shaft 27 protrudes from the motor body 24 toward the first power transmission 40. The rotational drive power of the drive shaft 27 is transmitted to the drive wheel (rear wheel 4) via the first power transmission 40. The drive shaft 27 is mounted to the first motor cover 22 via a first bearing 71.

The second coolant passage 28 is a path through which coolant for cooling the motor body 24 passes. In this embodiment, the second coolant passage 28 is formed in the motor cover 21. Specifically, the second coolant passage 28 is formed between the first motor cover 22 and the second motor cover 23. More specifically, the second coolant passage 28 is formed by a groove on the outer surface of the first motor cover 22. Forming the second coolant passage 28 between the first motor cover 22 and the second motor cover 23 makes it easy to form a circumferentially extending second coolant passage and to form a complex passage. For example, the groove formed in the first motor cover 22 may be a spiral shape that winds around the circumference multiple times and moves in the axial direction. Alternatively, circumferential grooves may be formed at intervals in the axial direction, with connecting grooves formed between them. Such a structure makes it easier to extend the flow path through the second coolant passage 28 and to more easily lower the temperature of the stator 25 fixed to the first motor cover 22. Therefore, the second coolant passage 28 is preferably formed close to the first motor cover 22 where the stator 25 is fixed. By passing coolant between the first motor cover 22 and the second motor cover 23, coolant can be flowed on the outer side of the first motor cover 22. This prevents the coolant from entering the inside of the first motor cover 22. However, the second coolant passage 28 may be formed in the motor body 24. Alternatively, the space between the motor cover 21 and the motor body 24 may be used as the second coolant passage 28. It is preferable that the second coolant passage be formed at a position adjacent to the heat-generating portion of the motor body, specifically the stator 25. As shown in Fig. 3, the second coolant passage 28 is connected to the first coolant passage 17. Therefore, the coolant supplied through the supply port 18 is first used to cool the inverter body 14 and then supplied to the second coolant passage 28 to cool the motor body 24. As shown in Fig. 3, a discharge port 29 is formed on the outer circumferential surface of the motor cover 21. The discharge port 29 is formed at a connection portion where a coolant hose for discharging the coolant used for cooling the motor unit 6 can be mounted. The coolant discharged from the motor unit 6 is cooled by a radiator and then resupplied to the supply port 18. Note that the supply port 18 and the discharge port 29 may be formed 180 degrees apart in the circumferential direction.

Generally, the inverter body 14 tends to become hotter than the motor body 24, so it requires a higher cooling level. Therefore, by cooling the inverter body 14 first, the inverter body 14 and motor body 24 can be appropriately cooled. Also, in this embodiment, the first coolant passage 17 and the second coolant passage 28 are connected. That is, passages that can be mutually connected are formed in the first coolant passage 17 and the second coolant passage 28. These mutually connectable passages are, for example, passages extending in the axial direction. By connecting the first coolant passage 17 and the second coolant passage 28, there is no need to individually supply and discharge coolant to the inverter body 14 and motor body 24. As a result, the number of supply ports 18 and discharge ports 29 can be reduced, and the number of coolant hoses can be reduced.

The first power transmission 40 is arranged adjacent to the first side of the electric motor 20. The first power transmission 40 transmits the drive power output from the drive shaft 27 toward the drive wheel (rear wheel 4). "Transmission toward the drive wheel" includes both directly transmitting drive power to the drive wheel and indirectly transmitting drive power to the drive wheel.

As shown in Fig. 2, specifically, the first power transmission 40 comprises a first gear 42, a second gear 43, a transmission shaft 44, and a sprocket 45. A lid member 41 is also mounted to the first power transmission 40 to cover the first gear 42, second gear 43, and transmission shaft 44. The lid member 41 includes a part that covers the first side of the first gear 42 and a part that covers the second side of the lid member 42. The lid member 41 is formed substantially as a circular plate and has the function of closing the first side of the motor cover 21. The lid member 41 is mounted on the second side in the axial direction to the motor cover 21. Specifically, the lid member 41 is mounted to the first motor cover 22 and the second motor cover 23.

The drive shaft 27 is mounted to the lid member 41 via a second bearing 72. This enables supporting both ends of the drive shaft 27 for rotation. The drive shaft 27 has a first gear 42 fixed to it. The first gear 42 meshes with the second gear 43 fixed to the transmission shaft 44. This transmits drive power to the second gear 43. Since the gear diameter of the first gear 42 is smaller than the gear diameter of the second gear 43, the drive power is transmitted with deceleration. The transmission shaft 44 is mounted to the lid member 41 via a third bearing 73 and a fourth bearing 74. The third bearing 73 and fourth bearing 74 are mounted to the lid member 41. A sprocket 45 is fixed to the transmission shaft 44. The sprocket 45 is a rotational body that rotates integrally with the transmission shaft 44. Note that the sprocket 45 may be directly fixed to the drive shaft 27 instead of the transmission shaft 44. A drive chain 60 is wound around the sprocket 45. The drive chain 60 transmits drive power to the rear wheel 4.

In this motor unit 6, since the inverter 10 and electric motor 20 are arranged side by side in the axial direction, the overall radial size can be made more compact compared to a layout where the inverter 10 is positioned radially outside the electric motor 20.

By arranging the inverter 10 with its thickness direction aligned along the axial direction of the electric motor 20, the radial protrusion of the inverter 10 can be suppressed, further compacting the radial size of the motor unit 6. Furthermore, since the terminals 15 protrude radially from the inverter cover 11, the harnesses connected to the terminals do not protrude in the axial direction, thus making the axial size of the motor unit 6 more compact. Also, since at least one of the supply port 18 and discharge port 29 protrude radially from the inverter cover 11, the hoses connected to the supply port 18 or discharge port 29 do not protrude in the axial direction, thereby making the axial size of the motor unit 6 more compact.

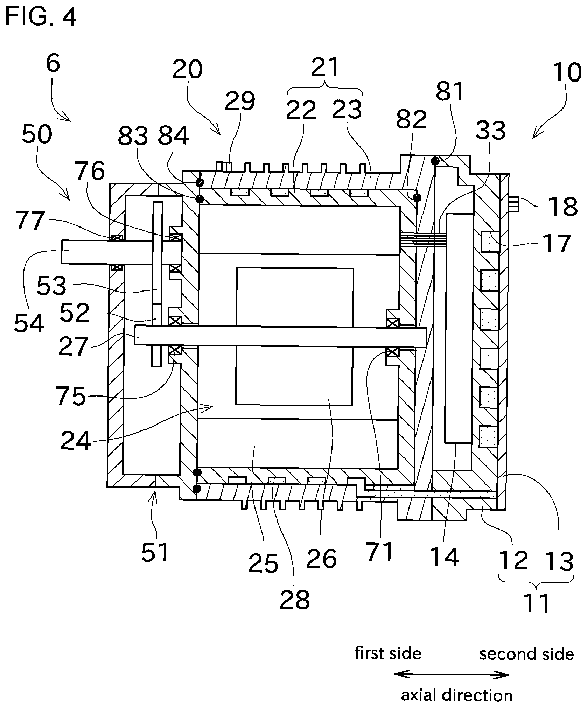

Next, with reference to Fig. 4, the motor unit 6 will be explained where the first power transmission 40 of the first embodiment is changed to the second power transmission 50.

The first power transmission 40 and the second power transmission 50 differ in their power transmission method. The transmission method refers to the mechanical method of transmitting drive power. In the first embodiment, the first power transmission 40 has a sprocket 45 mounted to the drive shaft 27. In contrast, in the second power transmission 50, the rotational force from the drive shaft 27 is speed-changed through a gear change structure before being transmitted to the sprocket. Note that the difference in transmission method is just an example, and other power transmission parts such as belt transmission or shaft transmission methods may be attachable.

The inverter 10 and electric motor 20 of the first embodiment are compatible with multiple power transmission parts with different power transmission methods. In other words, the motor unit 6 shown in Fig. 3 and the motor unit 6 shown in Fig. 4 can have the inverter 10 and electric motor 20 shared. This can reduce the cost of the motor unit 6.

In the motor unit 6 with the first power transmission 40, the motor cover 21 is closed by the lid member 41. In contrast, in the motor unit 6 with the second power transmission 50, the motor cover 21 is closed by the lid member 51. The lid member 51 is formed substantially as a circular plate, like the lid member 41 of the first embodiment. The lid member 51 has through-holes formed in the same locations as the lid member 41 of the first embodiment. The second side shape of the lid member 51 is the same as the second side shape of the lid member 41. Therefore, the lid member 51 can be mounted to the motor cover 21 of the electric motor 20 using the bolt 32 mentioned above.

The second power transmission 50 comprises a first gear 52, a second gear 53, and a transmission shaft 54. The drive shaft 27 is mounted to the lid member 51 via a second bearing 75. A first gear 52 is fixed to the drive shaft 27. The first gear 52 meshes with the second gear 53 fixed to the transmission shaft 54. This transmits drive power to the second gear 53. Since the gear diameter of the first gear 52 is smaller than the gear diameter of the second gear 53, the drive power is transmitted with deceleration. The transmission shaft 54 is mounted to the lid member 51 via a third bearing 76 and a fourth bearing 77. The third bearing 76 and fourth bearing 77 are mounted to the lid member 51. The drive power of the motor unit 6 is output via the transmission shaft 54. The drive power output by the transmission shaft 54 is transmitted to the drive chain 60 via other transmission mechanisms.

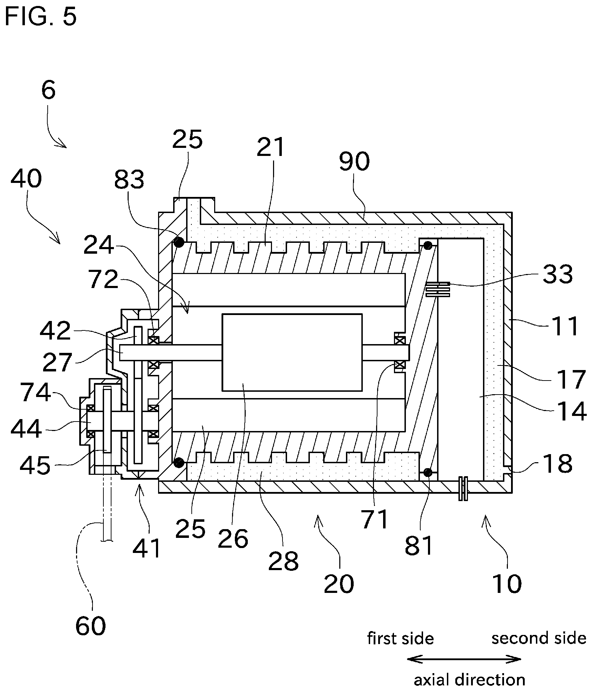

Next, with reference to Fig. 5, the motor unit 6 of the second embodiment will be explained. Note that in the following explanation, components that are the same or similar to those in the previous embodiments may be denoted by the same reference numerals, and their explanation may be omitted.

The motor unit 6 of the second embodiment comprises a unit cover 90. The unit cover 90 has the functions of the inverter cover 11 and the second motor cover 23 of the first embodiment. That is, the unit cover 90 covers the motor body 24 and the inverter body 14. The conductors 33 are arranged to pass through the mating surface between the electric motor 20 and the inverter 10, specifically the mating surface between the motor cover 21 and the inverter body 14. This mating surface is made waterproof by the first sealing member 81.

In the second embodiment, the first coolant passage 17 is formed between the unit cover 90 and the inverter body 14. The second coolant passage 28 is formed between the unit cover 90 and the motor cover 21.

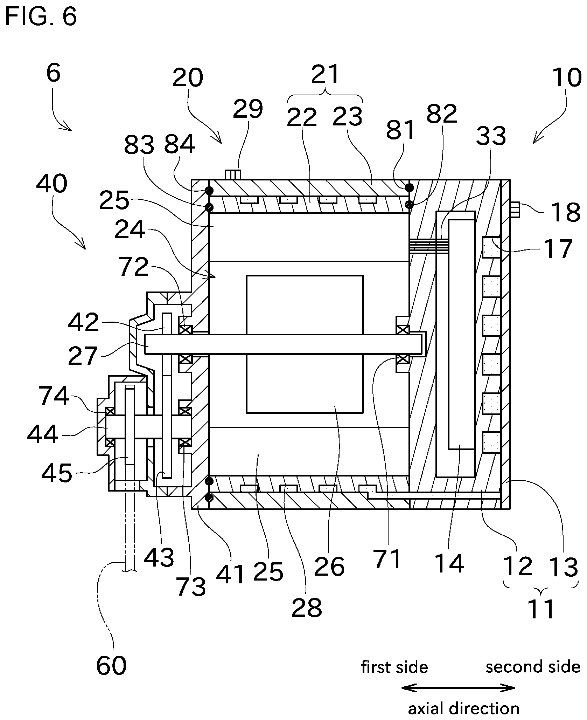

Next, with reference to Fig. 6, the motor unit 6 of the third embodiment will be explained.

The third embodiment differs from the first embodiment in the configuration of the motor cover 21 and inverter cover 11. Specifically, the motor cover 21 of the third embodiment has its second side in the axial direction open. Detailed, both the first motor cover 22 and the second motor cover 23 have their second side in the axial direction open. Moreover, the second side in the axial direction of the motor cover 21 is covered by the inverter cover 11. Consequently, the first bearing 71 is positioned in the first inverter cover 12.

This allows reducing the axial size of the motor cover 21. As a result, the axial direction of the motor unit 6 can be made even more compact.

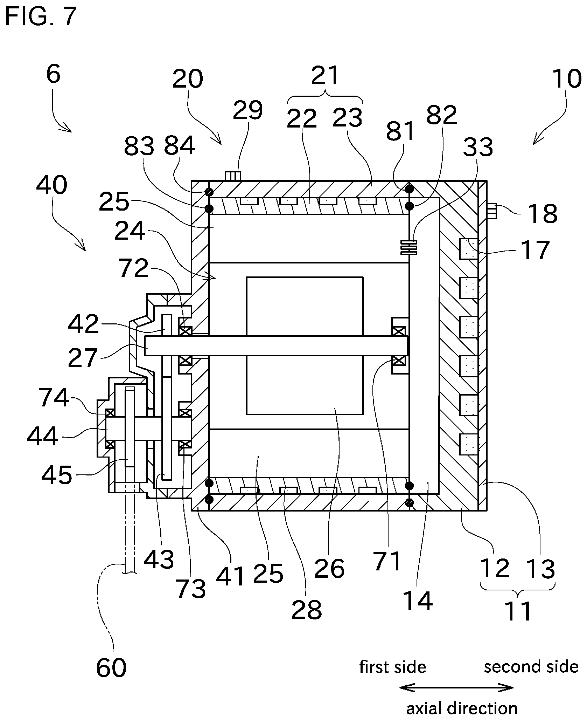

Next, with reference to Fig. 7, the motor unit 6 of the fourth embodiment will be explained.

In the third embodiment described above, the second side in the axial direction of the motor cover 21 is covered by the first inverter cover 12. In contrast, in the fourth embodiment, the second side in the axial direction of the motor cover 21 is covered by the inverter body 14.

This allows reducing the axial size of the inverter cover 11 and motor cover 21 compared to the first embodiment. As a result, the axial direction of the motor unit 6 can be made even more compact. Furthermore, in the first embodiment, through-holes needed to be formed in the motor cover 21 to pass the conductors 33, but this becomes unnecessary. In other words, the inverter body 14 and the stator 25 of the motor body 24 can be electrically connected with a simpler configuration. Note that this configuration is more easily realized when the motor body 24 is a direct current motor.

(Feature 1) As explained above, the motor unit 6 of this embodiment and its variations drives an electric vehicle. The motor unit 6 comprises an electric motor 20 and an inverter 10. The electric motor 20 generates drive power and outputs the drive power from a drive shaft 27 provided on the first side in the axial direction. The inverter 10 is arranged adjacent to the electric motor 20 in the axial direction, generates drive current for driving the electric motor 20, and supplies the drive current to the electric motor 20.

This prevents the motor unit from becoming large in the radial direction compared to a layout where the inverter is positioned radially outside the electric motor. In this embodiment, the inverter is arranged on the second side of the electric motor to prevent interference with the drive shaft.

(Feature 2) In the motor unit 6 of this embodiment, the inverter 10 is arranged such that its thickness direction follows the axial direction of the electric motor 20.

This can suppress the radial protrusion of the inverter 10, further making the radial size of the motor unit 6 more compact.

(Feature 3) In the motor unit 6 of this embodiment, the inverter 10 that converts direct current into alternating current to generate drive current corresponds to the current adjustment device.

This enables making the motor unit 6 including the inverter 10 more compact.

(Feature 4) In the motor unit 6 of this embodiment, the electric motor 20 comprises a motor cover 21. The inverter 10 comprises an inverter cover 11. The inverter cover 11 is mounted to the motor cover 21 so as to be in contact.

Since the motor cover 21 and inverter cover 11 are mounted in contact, the motor unit 6 can be handled integrally.

(Feature 5) In the motor unit 6 of this embodiment, the inverter cover 11 is a cylindrical shape coaxial with the motor cover 21.

This can suppress the radial protrusion of the inverter cover 11 from the motor cover 21.

(Feature 6) In the motor unit 6 of this embodiment, terminals 15 for supplying power to the inverter 10 are formed on the radial outer side of the inverter cover 11.

Since the supply port 18 is arranged on the axial outer side of the inverter cover 11, the terminals can be positioned to avoid the supply port.

(Feature 7) In the motor unit 6 of this embodiment, an insulating cover 16 having an insulating property is provided to cover the outer side of the terminal 15.

This can suppress short-circuiting of the terminal 15 with surrounding conductive components.

(Feature 8) In the motor unit 6 of this embodiment, conductors 33 are arranged inside the electric motor 20 and inverter 10. The conductors 33 are arranged in the axial direction and transmit drive current from the inverter 10 to the electric motor 20.

Since the electric motor 20 and inverter 10 are positioned around the conductors 33, protection of the conductors 33 becomes unnecessary or simplified.

(Feature 9) The electric motor 20 and inverter 10 are in contact via a first sealing member 81. The conductors 33 are arranged to pass through the mating surface between the electric motor 20 and inverter 10 or a surface continuous with this mating surface. The conductors 33 are arranged in an area made waterproof by the first sealing member 81.

By arranging the conductors 33 at the mating surface of the electric motor 20 and inverter 10, the conductors can be shortened. Additionally, using the first sealing member 81 allows simple prevention of water entry in the area of the conductors 33.

(Feature 10) In the motor unit 6 of this embodiment, the inverter 10 has a first coolant passage 17, and the electric motor 20 has a second coolant passage 28. The first coolant passage 17 and the second coolant passage 28 are connected.

Since the first coolant passage 17 and the second coolant passage 28 are connected, the coolant supply and discharge structures can be shared.

(Feature 11) In the motor unit 6 of this embodiment, the inverter 10 has a supply port 18 for supplying coolant, and the electric motor 20 has a discharge port 29 for discharging coolant that has passed through the first and second coolant passages.

This allows supplying coolant first to the inverter 10, which tends to become hotter.

(Feature 12) In the motor unit 6 of this embodiment, at least one of a supply port 18 to which coolant is supplied or a discharge port from which coolant is discharged is formed on the outer side in the axial direction of the inverter 10. The discharge port 29 is formed on the outer side in the radial direction of the electric motor 20.

Since no electric motor 20 is positioned on the axial outer side of the inverter cover 11, this area can be used to form the supply port 18. Additionally, since the axial end of the motor cover 21 is closed by the inverter 10, the radial outer area can be used to form the discharge port 29.

(Feature 13) The motor unit 6 comprises a first power transmission 40 or second power transmission 50 arranged adjacent to the first side of the electric motor 20, which transmits drive power output from the drive shaft 27 toward the rear wheel 4.

Compared to a configuration where the first power transmission 40 or the second power transmission 50 is externally attached, this enables a more compact configuration because the motor unit 6 comprises the first power transmission 40 or the second power transmission 50.

(Feature 14) In the motor unit 6, the power transmission is either a first power transmission 40 of a first drive system or a second power transmission 50 of a second drive system. The electric motor 20 comprises a motor cover 21. The power transmission comprises a lid member 41, 51. The motor cover 21 is capable of mounting both the lid member 41 of the first power transmission 40 and the lid member 51 of the second power transmission 50.

This allows sharing the electric motor 20 and inverter 10 between motor units 6 with first drive system and second drive system configurations.

The features 1 through 14 can be combined without contradiction. For example, feature N (N = 1, 2, ..., 14) can be combined with at least one of features 1 to N-1.

While the best mode of the present application has been explained above, the configuration can be modified as follows.

In the above embodiment, while the inverter 10 is formed in a circular plate shape, it may also be formed in a rectangular plate shape. In this case, it is preferable that the center of the inverter's external shape be positioned so as to reduce the radial protrusion from the motor cover 21 where the drive shaft 27 passes.

The conductors 33 may be configured using electrical wires or metal plates if the inverter body 14 and motor body 24 are not in surface contact. Positioning the conductors 33 between the inverter body 14 and motor body 24 along the axial line can shorten the conductor length. If the conductors 33 are positioned inside the inverter cover 11 or motor cover 21, this can prevent the conductors 33 from colliding with external obstacles that exist outside the motor unit 6.

The first coolant passage 17 and second coolant passage 28 are not essential components and can be omitted. Either the first or second coolant passage may be formed. The first and second coolant passages need not be connected. The supply port 18 and discharge port 29 may both be formed on the inverter cover 11 or motor cover 21. When formed on the inverter cover 11 or motor cover 21, it is preferable that they are on the radial outer circumferential surface. However, the supply port 18 or discharge port 29 may also be formed on the axial end surface.

The supply port 18 may be formed on the axial outer side of the inverter cover 11. It is preferable that the supply port 18 or discharge port 29 be positioned away from the terminal 15. When the supply port 18 or discharge port 29 is formed on the inverter cover 11, it is preferable that it be positioned lower than the terminal 15 when the motor unit 6 is in a grounded state.

It is preferable that the direction of terminal 15 protrusion from the inverter cover 11 be the same as the direction of hose connection to the supply port 18 or discharge port 29. This allows aligning the directions of hoses and harnesses, making it easier to share the space for their connections.

The conductors 33 are preferably positioned inside the inverter cover 11 and motor cover 21, and the first coolant passage 17 or second coolant passage 28 is preferably formed in a space walled off from the space containing the conductors 33. In the above embodiment, two separate spaces are created in the motor cover 21, with the conductors 33 and second coolant passage 28 placed in separate spaces. In the inverter 10, the conductors 33 and the first coolant passage 17 are separately arranged in two spaces partitioned by a wall that partitions between the electrical components and the first coolant passage 17.

## Claims

1. A motor unit that drives a vehicle, comprising:
an electric motor that generates a drive power and outputs the drive power from a drive shaft provided on a first side in an axial direction; and
a current adjustment device that is arranged adjacent to the electric motor in the axial direction, generates a drive current for driving the electric motor, and supplies the drive current to the electric motor.

2. The motor unit according to claim 1, wherein
the current adjustment device is arranged such that a thickness direction of the current adjustment device follows the axial direction of the electric motor.

3. The motor unit according to claim 1 or 2, wherein
the current adjustment device is an inverter that converts direct current into alternating current to generate the drive current.

4. The motor unit according to claim 1 or 2, wherein
the electric motor includes a motor cover,
the current adjustment device includes an adjustment device cover, and
the adjustment device cover is mounted to the motor cover so as to be in contact with the motor cover.

5. The motor unit according to claim 4, wherein
the adjustment device cover is of a cylindrical shape coaxial with the motor cover.

6. The motor unit according to claim 4, wherein
a terminal that supplies electric power to the current adjustment device is formed on an outer side in a radial direction of the adjustment device cover.

7. The motor unit according to claim 6, wherein
an insulating cover having an insulating property and covering an outer side of the terminal is provided on the adjustment device cover.

8. The motor unit according to claim 1 or 2, wherein
a conductor is arranged inside the electric motor and the current adjustment device, and
the conductor is arranged in a direction along the axial direction and transmits the drive current from the current adjustment device to the electric motor.

9. The motor unit according to claim 8, wherein
the electric motor and the current adjustment device are in contact via a sealing member,
the conductor is arranged so as to pass through a mating surface between the electric motor and the current adjustment device or a surface continuous with the mating surface, and
the conductor is arranged in a region that is made waterproof by the sealing member.

10. The motor unit according to claim 1 or 2, wherein
a first coolant passage is formed in the current adjustment device,
a second coolant passage is formed in the electric motor, and
the first coolant passage and the second coolant passage are connected to each other.

11. The motor unit according to claim 10, wherein
a supply port to which coolant is supplied is formed in the current adjustment device, and
a discharge port from which the coolant having passed through the first coolant passage and the second coolant passage is discharged is formed in the electric motor.

12. The motor unit according to claim 10, wherein
at least one of a supply port to which coolant is supplied and a discharge port from which coolant is discharged is formed on an outer side in a radial direction of the electric motor.

13. The motor unit according to claim 1 or 2, wherein
a power transmission that is arranged adjacent to the first side in the axial direction of the electric motor and transmits the drive power output from the drive shaft toward a drive wheel is provided.

14. The motor unit according to claim 13, wherein
the power transmission is a first power transmission of a first drive system, or a second power transmission of a second drive system,
the electric motor includes a motor cover,
a lid member is mounted to the power transmission, and
the motor cover is capable of having mounted thereto the lid member of the first power transmission and the lid member of the second power transmission.
